# EUROPEAN PATENT APPLICATION

(11) **EP 2 551 985 A2**
(43) Date of publication of application: **30.01.2013**
(21) Application number: 12178133.0
(22) Date of filing: 26.07.2012
(51) Int. Cl.: H02J 3/38

(54) **System and method for power curtailment in a power network**

(30) Priority: 29.07.2011 US 201113193845
(71) Applicant: General Electric Company, Schenectady, NY 12345 (US)
(72) Inventor: El-Barbari, Said Farouk Said, Niskayuna, NY New York 12309 (US); De Bedout, Juan Manuel, Niskayuna, NY New York 12309 (US); Smith, David, Niskayuna, NY New York 12309 (US); Galbraith, Anthony William, Niskayuna, NY New York 12309 (US)
(74) Representative: Picker, Madeline Margaret

(57) **Abstract**

A power curtailment system (18) is electrically coupled to a power converter (14) and configured to control the power converter (14) to adjust output power of the power converter (14) in response to a power curtailment requirement condition. The power curtailment system (18) includes at least one sensor configured to measure at least one environmental factor in an environment of the power converter (14) over time. The power curtailment system (18) further includes a controller configured to adjust a power curve over time based on the at least one environmental factor and, upon the power curtailment requirement condition, control the power converter (14) to provide an adjusted output power based on data from the power curve and the power curtailment requirement condition.

## Description

### BACKGROUND

The invention generally relates to power curtailment and more specifically to power curtailment in a solar power network.

With the rising cost and scarcity of conventional energy sources and concerns about the environment, there is a significant interest in alternative energy sources such as solar power and wind power. Solar power generation uses photovoltaic sources to generate electricity from the sun. Multiple photovoltaic sources are electrically coupled to one another in such systems to generate electricity. The amount of electricity generated from the photovoltaic sources depends on naturally occurring factors such as irradiance and ambient temperature. The irradiation and environmental temperature are dynamic in nature and change constantly. In some circumstances, high irradiance and low ambient temperature would increase the power generated by the photovoltaic sources to such a level that is more than the power that can be absorbed by an inverter, and damage to the inverter results. Furthermore, photovoltaic sources are connected to a power grid and are typically controlled to supply a variable power to the utility/load. However, in a situation where the load at the utility is smaller than the supplied power, the frequency of the utility power grid undesirably increases.

The above mentioned issues may be overcome by employing a power curtailment system that selectively curtails power. However, current power curtailment techniques have response and recovery times that are slower than would be desirable.

Hence, there is a need for an improved system to address at least some of the aforementioned issues.

### BRIEF DESCRIPTION

In one embodiment a power curtailment system is electrically couplable to a power converter and configured to control the power converter to adjust an output power of the power converter in response to a power curtailment requirement condition. The power curtailment system includes at least one sensor configured to measure at least one environmental factor in an environment of the power converter over time. The power curtailment system further includes a controller configured to adjust a power curve over time based on the at least one environmental factor and, upon an occurrence of the power curtailment requirement condition, control the power converter to provide an adjusted output power based on data from the power curve and the power curtailment requirement condition.

In another embodiment a method for power curtailment in a power network is provided. The method includes obtaining data regarding at least one environmental factor in an environment over time. The method also includes generating a power curve based on the at least one environmental factor over time. The method further includes controlling a power converter upon an occurrence of a power curtailment requirement to provide an adjusted output power based on the power curve and the power curtailment requirement condition.

In yet another embodiment, a non-transitory computer-readable medium comprises computer-readable instructions of a computer program that, when executed by a processor, cause the processor to perform a method that comprises: obtaining data regarding at least one environmental factor in an environment over time; generating a power curve based on the at least one environmental factor over time; and controlling a power converter upon occurrence of a power curtailment requirement based on the power curve to provide an adjusted output power.

### DRAWINGS

These and other features, aspects, and advantages of the present invention will become better understood when the following detailed description is read with reference to the accompanying drawings in which like characters represent like parts throughout the drawings, wherein:
FIG. 1 is a block diagram representation of an exemplary power conversion system including a power curtailment system in accordance with an embodiment of the invention.
FIG. 2 is a block diagram representation of a power curtailment system including a sensor and a controller in accordance with an embodiment of the invention.
FIG. 3 is an exemplary graphical representation of a power curve generated by a controller in accordance with an embodiment of the invention.
FIG. 4 is a flow chart representing steps involved in a method for curtailing power in a power network in accordance with an embodiment of the invention.

### DETAILED DESCRIPTION

Embodiments of the present invention include a system and method for power curtailment of a power generation system in a power network. In one specific embodiment, the power generation system includes a power converter electrically couplable to one or more photovoltaic sources and configured to provide an output power. A power curtailment system is electrically coupled to the power converter and configured to control the power converter to adjust the output power in response to a power curtailment requirement condition. The power curtailment system includes at least one sensor configured to measure at least one environmental factor in an environment of the power converter over time. The power curtailment system further includes a controller configured to adjust a power curve over time based on the at least one environmental factor and, upon occurrence of the power curtailment requirement condition, control the power converter to provide an adjusted output power based on data from the power curve and the power curtailment requirement condition.

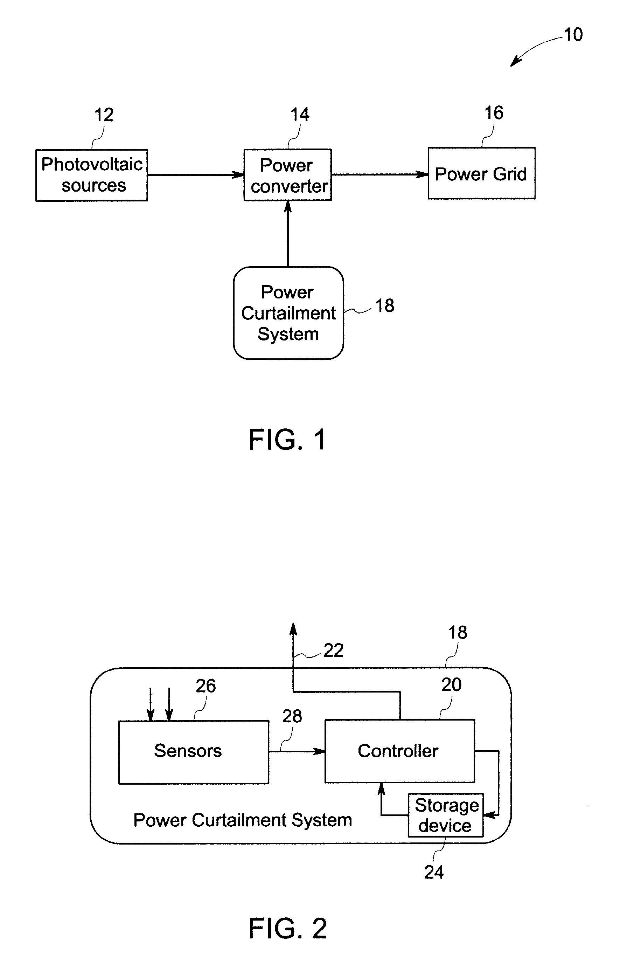

FIG. 1 is a block diagram representation of an exemplary power conversion system 10 including a power curtailment system in accordance with an embodiment of the invention. The system 10 includes a plurality of photovoltaic sources 12 that generate a direct current (DC) power from solar energy. The DC power is transferred to a power converter 14. The power converter 14 receives the DC power and converts the DC power to an output power that is fed to the power grid 16. In on embodiment, the output power is an alternating current (AC) power. The power converter 14 is coupled to a power curtailment system 18 that controls the output power generated by the power converter 14. The power curtailment system 18 adjusts the output power in response to a power curtailment requirement condition. The power curtailment requirement condition is based on the output power required to serve a load/utility connected to the power grid. In one embodiment, the power curtailment requirement condition results in a curtailing requirement or a restoring requirement depending upon whether the grid is under-loaded or over-loaded respectively. The command resulting from the power curtailment requirement may be sent by the controller to the power converter or may be sent to the power converter by the grid operator, resulting in curtailing or restoring power depending on the grid condition being monitored. In situations where the load is small and the output power provided is higher than required, a curtailing requirement is generated to reduce the amount of the output power being transmitted to the utility. In an exemplary embodiment, the curtailing requirement includes a requirement to curtail the output power to sixty percent, thirty percent or zero percent of the original output power. Furthermore, a restoring requirement is generated in situations wherein curtailment has previously occurred and the output power transmitted to a load becomes less than the output power required to serve the load connected to the power grid. In one embodiment, the restoring requirement includes a requirement to restore the output power to a power level higher than a previously curtailed power level. In some embodiments (not shown) power converter 14 may comprise multiple power converters with one example including a DC to DC converter coupled to a DC to AC inverter with the power curtailment system 18 operable to control the DC to AC inverter.

FIG. 2 is a block diagram representation of a power curtailment system 18 in accordance with an embodiment of the invention. The power curtailment system 18 controls the power converter 14 (FIG. 1) to provide an adjusted output power according to the power curtailment requirement condition. The power curtailment system 18 includes a controller 20 that transmits control signals 22 to the power converter 14 for generating the adjusted output power. In one embodiment, the control signals 22 are for controlling a voltage level for operating the power converter 14 to generate the adjusted output power. The voltage level is identified by the controller 20 from a power curve that is generated by the controller 20 based on the at least one environmental factor and the power curtailment requirement condition. In one embodiment, the power curve is stored in a data storage device 24 provided within the power curtailment system 18 and may be in the form of a power look up table. The controller 20 identifies the voltage level from the power look up table and controls the operations of the power converter 14 to provide the adjusted output power. In an alternative embodiment, the controller 20 may also control the current level identified from the power curve for operating the power converter.

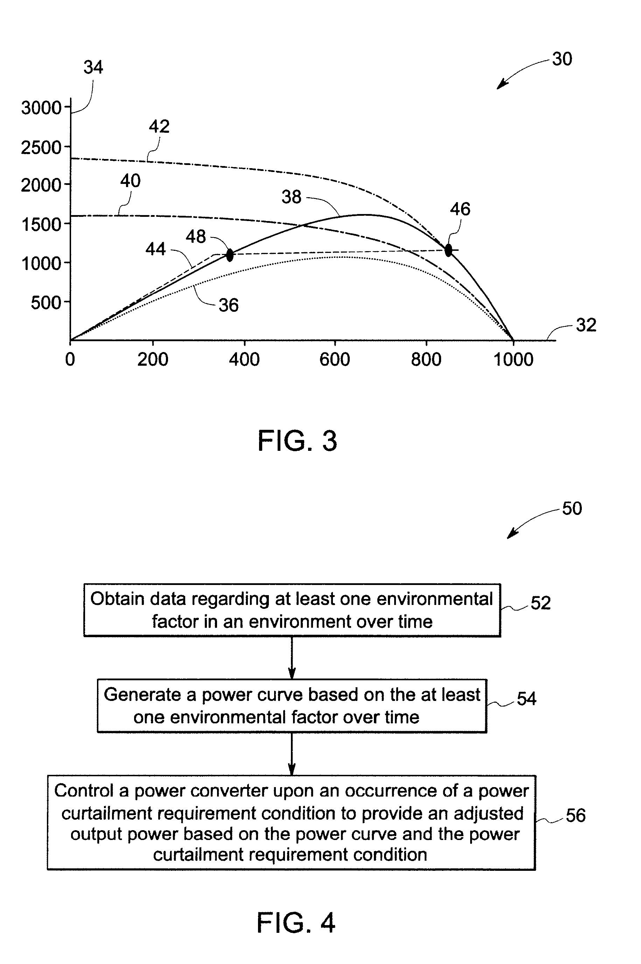

FIG. 3 is an exemplary graphical representation of a power curve 30 generated by a controller 20 in accordance with an embodiment of the invention. The controller 20 generates the power curve 30 based on the at least one environmental factor that is measured by at least one environmental sensor 26. In an embodiment, the at least one environmental factor includes temperature and irradiance and are measured by a temperature sensor and an irradiance sensor. The controller 20 obtains the values 28 of the at least one environmental factor and uses that information to compute the power curve 30. As illustrated, the power curve 30 includes an X-axis 32 representing voltage in volts. The power curve 30 includes a Y-axis 34 that represents current in amperes and power in watts. The controller 20 obtains the values 28 of the at least one environmental factor and generates the power curve 30 from a predicted voltage and a predicted current calculated from a mathematical model by the controller 20. In one embodiment, the controller 20 includes a photovoltaic array model in a matrix form to calculate the predicted voltage and the predicted current generated by the photovoltaic sources 12. Due to dynamic nature of the environmental factors, the controller 20 obtains the values 28 over time and adjusts the power curve 30 accordingly. The controller 20 is then ready in real time, as a power curtailment requirement condition occurs, to identify the voltage or current level for operating the power converter 14, based on most recently computed the power curve 30, to generate the adjusted output power required by the power curtailment requirement condition.

As depicted, the curve 36 represents power generated at normal operating conditions. The curve 38 represents power generated at abnormal operating conditions. Curve 40 represents voltage-current characteristics in normal operating conditions. Curve 42 represents voltage-current characteristics in abnormal operating conditions. As used herein, the terms "normal operating conditions" and "abnormal operating conditions" are relative to a particular load at the power grid and a particular photovoltaic array and may vary according to different given situations. Curve 44 represents a power limit of the power converter 14 (FIG. 1). Curve 44 indicates that the same power can be delivered at two different voltages represented by point 46 and 48. Point 46 represents a high voltage low current point (approximately 850 volts and 1070 amperes for purposes of example) for operating the power converter 14 and point 48 represents a low voltage high current point (approximately 390 volts and 2350 amperes for purposes of example) for operating the power converter 14. In one example, in case of the abnormal operating conditions, the power generated by the power converter 14 is controlled by controlling the voltage in the power curve at point 46. Alternatively, the power can be controlled by controlling the voltage in the power curve as shown at point 48 which has a lower voltage than that of point 46. In situations, where the temperature is low and the irradiance is high, the voltage at point 46 may be so high that it may cause damage to the inverter might result from operating at point 46. In such circumstances, curtailment at point 48 is recommended. In other circumstances, point 46 is desirable due to the higher losses caused by the higher current when operating at point 48. Therefore, there is a need to make a decision when to choose one point over the other. The mathematical model of the photovoltaic array can be used to make this decision by pre-calculating the voltage at point 46 using the data provided by the temperature and irradiance sensors. In one example, the controller 20 will curtail the power at point 46 as long as the calculated voltage by the model at that point is less than a threshold voltage that might cause damage to the inverter.

FIG. 4 is a flow chart representing steps involved in a method 50 for curtailing power in a power network in accordance with an embodiment of the invention. The method 50 includes obtaining data regarding at least one environmental factor in an environment over time in step 52. In one embodiment, the data obtained regarding the at least one environmental factor includes a measure of an irradiation and a temperature in the environment. The data obtained regarding the at least one environmental factor is computed to generate a power curve in step 54. The method 50 also includes controlling a power converter upon a power curtailment requirement to provide an adjusted output power based on the power curve in step 56. In one embodiment, the power converter is controlled by identifying a voltage level from the power curve for operating the power converter to provide the adjusted output power. In another embodiment, the power converter is controlled upon the power curtailment requirement to operate at sixty percent capacity, thirty percent capacity or zero percent capacity. In an exemplary embodiment, the power converter is controlled upon the power curtailment requirement to operate a power converter at a higher power level than a previously curtailed power level.

In this written description, the term "exemplary" is intended to mean "by way of example" and not to indicate any special or advantageous example. The various embodiments of the system for power curtailment in the power network described above include a power curtailment system electrically coupled to a power converter that enables adjusting the output power based on the power curtailment requirement condition. The power curtailment system includes a controller that identifies a voltage or current level from a power curve based on the power curtailment requirement for operating the power converter to generate the adjusted output power. This reduces the time for adjusting the output power according to the power curtailment requirement resulting in better efficiency.

It is to be understood that a skilled artisan will recognize the interchangeability of various features from different embodiments and that the various features described, as well as other known equivalents for each feature, may be mixed and matched by one of ordinary skill in this art to construct additional systems and techniques in accordance with principles of this disclosure. It is, therefore, to be understood that the appended claims are intended to cover all such modifications and changes as fall within the scope of the invention as defined therein.

While only certain features of the invention have been illustrated and described herein, many modifications and changes will occur to those skilled in the art. It is, therefore, to be understood that the appended claims are intended to cover all such modifications and changes as fall within the scope of the invention as defined therein.

## Claims

1. A power curtailment system (18) electrically couplable to a power converter (14) and configured to control the power converter (14) to adjust an output power of the power converter (14) in response to an occurrence of a power curtailment requirement condition, the power curtailment system (18) comprising:
at least one sensor (26) configured to measure at least one environmental factor in an environment of the power converter (14) over time; and
a controller (20) configured to adjust a power curve (30) over time based on the at least one environmental factor and, upon the occurrence of the power curtailment requirement condition, control the power converter (14) to provide an adjusted output power based on data from the power curve (30) and the power curtailment requirement condition.

2. The system (18) of claim 1, wherein the controller (20) identifies a voltage level from the power curve (30) for operating the power converter (14) to provide the adjusted output power based on the power curtailment requirement condition.

3. The system of claim 2, wherein the controller (20) selects between two voltage level options by assessing whether the higher of the two voltage level options is within a threshold voltage of the power converter and, if so, using the higher level voltage option.

4. The system (18) of claim 2 or claim 3, wherein the controller (20) identifies the voltage level from a look up table generated based on the power curve (30).

5. The system of any preceding claim, wherein the power curve comprises a photovoltaic power curve and/or wherein the at least one sensor (26) comprises an irradiation sensor or a temperature sensor.

6. The system of any preceding claim, wherein the occurrence of the power curtailment requirement condition results in a curtailing requirement or a restoring requirement.

7. The system of claim 6, wherein:
the curtailing requirement comprises a requirement to lower the output power, and preferably curtail the output power to sixty percent, thirty percent or zero percent of the output power, and/or
the restoring requirement comprises a requirement to restore the output power to a power level higher than a previously curtailed power level.

8. The system of any preceding claim, wherein the power curtailment system comprises a data storage device to store the power curve.

9. A power conversion system (10) comprising:
at least one photovoltaic power source (12);
a power converter (14) electrically coupled to the at least one photovoltaic power source (12) and configured to provide an output power; and
a power curtailment system (18) as claimed in any one of claims 1 to 8, electrically coupled to the power converter (14).

10. A method comprising:
obtaining data regarding at least one environmental factor in an environment over time;
generating a power curve (30) based on the at least one environmental factor over time; and
controlling a power converter (14) upon an occurrence of a power curtailment requirement condition to provide an adjusted output power based on the power curve (30) and the power curtailment requirement condition.

11. The method of claim 10, wherein controlling the power converter (14) upon the power curtailment requirement comprises operating the power converter (14) at sixty percent capacity, thirty percent capacity, or zero percent capacity.

12. The method of claim 10 or claim 11, wherein controlling the power converter (14) comprises identifying a voltage level from the power curve generated over time for operating the power converter (14) to provide the adjusted output power.

13. The method of claim 10, 11 or 12, wherein controlling the power converter (14) upon the power curtailment requirement comprises operating the power converter (14) at a higher power level than a previously curtailed power level.

14. The method of claim 10, 11, 12 or 13, wherein obtaining data regarding the at least one environmental factor comprises measuring an irradiation and a temperature in the environment.

15. A non-transitory computer-readable medium comprising computer-readable instructions of a computer program that, when executed by a processor, cause the processor to perform a method as claimed in any one of claims 10 to 14.
